# EUROPEAN PATENT APPLICATION

(11) **EP 4 636 268 A1**
(43) Date of publication of application: **22.10.2025**
(21) Application number: 25170618.0
(22) Date of filing: 15.04.2025
(51) Int. Cl.: F16B 25/00, F16B 25/10, F16B 35/06, E04B 2/74

(54) **ACOUSTIC SCREW**

(30) Priority: 15.04.2024 EP 24170248
(71) Applicant: Etex Building Performance International SAS, 84915 Avignon (FR)
(72) Inventor: DEMANET, Cyrille, 30400 Villeneuve les Avignon (FR); VIAL, Emmanuel, 13500 Martigues (FR); LOUIS, Stanislas, 84310 Morières-lès-Avignon (FR)
(74) Representative: Etex Services NV - Etex IPSC

(57) **Abstract**

1. Drywall acoustic screw (1) for fastening a plasterboard (7) having a thickness T to a support (8), comprising
- a countersunk head (2), an elongated shank (4) and a tip portion (3) wherein the shank defines an axis A in its longitudinal direction and extends along the axis from the head (2) to the tip portion (3) (L1) and has a threaded portion (5) of a diameter D3
wherein the countersunk head (2) having a diameter D1, said countersunk head (2) includes a tapered underneath surface 12, on which are protruding at least two ribs (13), said ribs run diagonally to the axis of the shank,
wherein the tip portion (3) adjoins the threaded portion (5) and is suitable for producing a first borehole in the plasterboard and a second borehole in the support when the drywall screw is driven through the plasterboard in the direction of the axis,
**wherein a widening element (6)** is arranged between the head and the threaded portion (7) and presents a maximum diameter D4>D3,

characterized in that a diameter D2 defined by points of the ribs that protrude the most is ≥ than D4 and > D1

## Description

### Field of the invention

The present invention relates to a drywall acoustic screw, to a drywall comprising light weight plasterboards or high density plasterboards and acoustic screws.

### BACKGROUND OF THE INVENTION

It is known that the screwing of the plasterboards has an influence on the airborne sound insulation of a drywall. A drywall is made with a single layer of plasterboards or a double layer of plasterboards which is then called a double skin.

Airborne sound insulation refers to the ability of a drywall to reduce the transmission of sound waves through the air from one space to another. It is a measure of how effectively a barrier can block sound traveling through the air, such as speech, music, or other airborne noises.

Airborne sound insulation is typically quantified using a rating system known as Weighted Sound Reduction Index (Rw). These rating indicates the effectiveness of a material or structure in reducing the transmission of airborne sound at various frequencies. The combination of the norms EN ISO 10140-2:2021 "Laboratory measurement of sound insulation of building elements" - Part 2 and ISO 717-1: 2020 -Part 1 provides method to assess Airborne sound insulation of partition wall.

It is known that plasterboards or gypsum boards have a high Rw ratings, specially for high density boards.

A plasterboard has typically a gypsum core sandwiched between two facers which are often made of paper or of non woven facers.

When installing plasterboards, the way it is screwed or fastened to the underlying structure can impact its ability to block airborne sound transmission.

The spacing between screws or fasteners along the edges and in the field of the plasterboard can influence its rigidity and overall acoustic performance. Closer spacing of screws generally results in a more rigid installation, which negatively impact the sound transmission.

The type and quality of screws used to fasten the plasterboard can also affect its acoustic performance.

As already mentioned, the density of the plasterboards influences the airborn insulation. It is known that increasing the weight surface of 1 kg/m² improves about 1 db better for the airborne insulation.

However, the trend nowadays is to reduce the weight of the boards. The purpose of the invention is to compensate acoustic reduction when using lightweight plasterboards (below 680 kg/m3 ) or to propose better acoustic with high density boards (higher than 880 kg/m3) with limited impact on the system mechanical performances.

The inventors have found that reducing the contact between the screw and the board, by creating a volume containing air and milled gypsum around the shank of the acoustic screw and by cutting the connection with the facer improve the airborne sound insulation.

US2007/0292235 discloses a self-drilling screw for securing hard materials like hard woods or plywood boards with a rigid surface layer to softer supports such as aluminium. The screw features are threaded portion, a drill bit, a non-threaded shank, a conical head, and a reaming portion composed of radially protruding blades. Countersinking blades are located on the seating face of the conical head of the screw but the hole produced in the hard material has the same diameter than the diameter of the screw's head.

The document TW-I747927-B primarily discusses a screw design and its application in fixing a plate to a base. The screw (20) is detailed to have a shank (1) with a thread (13), ending in a final attack portion (2), and a head (3) on the opposite end. A distinctive feature of this screw is the inclusion of flaps (4) that protrude diametrically. These flaps are positioned along a portion of the shank (1).

### DESCRIPTION OF THE INVENTION

The first object of the invention is a drywall acoustic screw for fastening a plasterboard having a thickness T to a support, comprising a countersunk head, an elongated shank and a tip portion. The shank defines an axis A in its longitudinal direction and extends along the axis from the countersunk head to the tip portion and has a threaded portion of a diameter D3.

The countersunk head has a diameter D1 and includes a tapered underneath surface, on which are protruding at least two ribs, said ribs run(s) diagonally to the axis of the shank. An embodiment may comprise four ribs. The diameter D1 is the diameter of the outer and furthest surface of the head from the tip, said surface being perpendicular to the longitudinal axis A. A minimum of ribs is preferred to minimize the contact with the board. In one embodiment, the main dimension of the rib has a longitudinal direction which form an angle between 40 to 60°C with the longitudinal axis A of the shank.

The diameter D2 is defined by points of the ribs that protrude the most is >D1 and ≥ than D4. In some embodiment the ribs can join punctually the outmost surface of the countersunk head. In that case the diameter D1 is not measured on from these points.

The tip portion adjoins the threaded portion and is suitable for producing a first borehole in the plasterboard and a second borehole in the support when the drywall screw is driven through the plasterboard in the direction of the axis A.

The drywall screw has a widening element which is arranged between the countersunk head and the threaded portion and presents a maximum diameter D4>D3 The diameter D4 is predetermined by a radial extent of the widening element with respect to the axis A. The widening element may breaks off when impinging the metal support. In a preferred embodiment the widening element is resilient as it does need to break off. The widening element is indeed not supposed to drill into the support. This can be automatically controlled by using a stop screwdriver.

The head of the screw remains slightly below the surface level of the board as it is always the case when using a stop screwdriver.

In a drywall, by having a diameter D2 >D1 , the facer of the board is ripped and there is no more a tight connection between the screw head and the plasterboard. In addition, there is a space containing air and milled gypsum surrounding the screw preferably in more than 80% of the thickness of the plasterboard. It is believed that these features have an impact on the acoustic. In order to not impair the mechanical performance of the board, the widening element may preferably not enlarge the bore in the support which is the stud to which the plasterboard is screwed. The studs are preferably metal studs. Therefor the widening element having a furthest end from the head of a length t ≤ the thickness of the board T or the sum of the thicknesses of the two boards when the screw is used to fasten a double skin wall. The widening element is arranged between the head and the threaded portion. The widening element stands preferably on an unthreaded portion. In one embodiment, the diameter D2 defined by points of the ribs that protrude the most is at most 120% of the diameter D1 and preferably at most 110% of the diameter D1.

In a preferred embodiment, the widening element comprises two projections. The projections are diametrically opposed with respect to the longitudinal axis of the shank.

The diameter D2 defined by points of the ribs (13) that protrude the most is ≥ than the diameter D4. As such the volume created by the rib receives the head of the screw as for aesthetic reason the surface of the head may be lightly encased in the plasterboard. A filing joint will indeed be used to equalized the surface around the screw. In addition, the bigger diameter also participate to reducing the contact with the non milled gypsum.

The widening element having a furthest end from the tip of at least 10 mm. A minimum of 10 mm of the screw in the support is required to provide good fastening of the plasterboard.

In one embodiment the projections are wing shaped.

In another embodiment the tip portion is threaded for better penetration in the gypsum.

The head presents a flat surface with slots for engagement by a driving tool of any suitable nature and preferably a stop screwdriver.

Another object of the invention is a drywall comprising at least one plasterboard (7) having a thickness T and acoustic screws according to any one of previous claims wherein a borehole having a diameter at least equal to D4 is present in the plasterboard on more than 80% of the thickness of the board and wherein the widening element (6) has a furthest end from the head of at most a length t ≤ the thickness of the board .

One particular embodiment of the invention is a drywall comprising plasterboards having a thickness of 12.5mm and fastened with acoustic screws as described here above and tested according to the norm EN ISO 10140-2:2021 and ISO 717-1 2020. Such drywall has a RW of at least one db and preferably at least 2 db higher than the same drywall with the same plasterboard using screw having a total length of 25 mm, a diameter of 3.5 mm for the threaded portion and a diameter of 7mm for the head of the screw such the Vis PRÉGY TF212x25.

In one embodiment of the invention, the drywall comprises boards having a density below 8.5 kg/m² or 680 kg/m³

In another embodiment, the drywall comprises boards having a density below 11 kg/m² or 880 kg/m³.

Another object of the invention is a double skin drywall comprising a least two stacked plasterboards having a total thickness Tt and acoustic screws according to any one of previous claims wherein a borehole having a diameter at least equal to D4 is present in the plasterboard on more than 80% of the total thickness of the boards and wherein the widening element has a furthest end from the head of at most a length t ≤ the thickness of the sum of the thicknesses of the two boards.

A last object of the invention is the use of a screw as described here above to improve the acoustic of a drywall made of a single skin or double skin.

### BRIEF DESCRIPTION OF THE SEVERAL VIEWS OF THE DRAWINGS

FIG. 1 is an elevational view of a drywall acoustic screw according to the invention.
FIG. 2 is a top cross-sectional view of an acoustic screw in a drywall structure comprising the screw, the plasterboard and the stud.
FIG.3 is a perspective view of prior art screw for a plasterboard - Vis PRÉGY TF212x25
FIG.4 shows Sound reductions index for example 1.

### DETAILED DESCRIPTION OF THE INVENTION

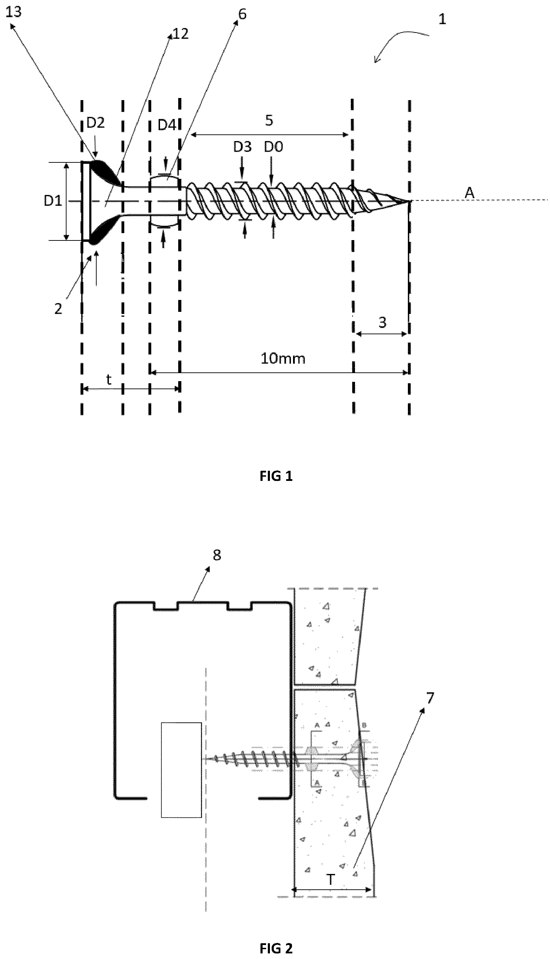

As illustrated in Figures 1 & 2, the present invention concerns a drywall acoustic screw for fastening a plasterboard (7) having a thickness T, comprising a head (2), an elongated shank and a tip portion (3). The shank (4) defines an axis A in its longitudinal direction and extends along the axis from the head (2) to the tip portion (3) and has a threaded portion (5) of a diameter D3. The diameter D3 of the threaded portion is the outside diameter bigger than the diameter of the shank D0.

The head (2) has a diameter D1 and includes a tapered underneath surface 12, on which are protruding four or two ribs (13), said ribs run(s) diagonally to the axis of the shank A. In some embodiment the ribs are in the form of elongated parallelepeds or vanes or wings.

The tip portion (3) is defined as the portion of the screw wherein the diameter of the shank starts to decrease and ends by a tip. The tip portion may be threaded.

The tip portion (3) adjoins the threaded portion (5) and is suitable for producing a first borehole in the plasterboard and a second borehole in the support when the drywall screw is driven through the plasterboard in the direction of the axis A.

The drywall screw has a widening element (6) which is suitable for widening the first borehole in the plasterboard to a first borehole diameter D4>D3 on more than 80%, preferably more than 90 % of the thickness of the board. The diameter D4 is predetermined by a radial extent of the widening element 6 with respect to the axis A. When the widening element has not a constant diameter, D4 is the bigger diameter of the widening element.

The elongated shank may comprise an unthread portion jointing the head of the screw.

In Figure 1, the widening element (6) comprises two projections and is arranged between the head and the threaded portion (5).

The projections are diametrically opposed with respect to the longitudinal axis of the screw. The projections protrude from an unthreaded portion.

The widening element is resilient.

The diameter D2 defined by points of the ribs (13) that protrude the most is ≥ than the diameter of D4. D2 will define the volume which will receive the head of the screw as for aesthetic reason the surface of the head is lightly encased in the plasterboard. A filing joint will indeed be used to equalize the surface around the screw. The widening element (6) having a furthest end from the head of at most a length t ≤ the thickness of the board T. In Fig. 1 there are two ribs to mill the gypsum in a first place and to minimize the contact with the un-milled gypsum The widening element having a furthest end from the tip of at least 10 mm. A minimum of 10 mm of the screw over the metal structure is required to provide good fastening of the plasterboard.

In one embodiment D2 > D1 and D4>D1.

In another embodiment D2>D1 and D4 < D1.

### EXAMPLES

A prototype screw according to the invention having the followings were tested. The screw has the following dimensions:
D1: 7.3 mm
D2: 8mm
t=11 mm
D4: 5,90 mm
D3: 3,9 mm

Total length of the screw :25 mm.

Board Thickness (outside the tapered edge): 12.5 mm

Measurements on partition were done in accordance with EN ISO 10140-2 "Laboratory measurement of sound insulation of building elements" - Part 2. The sound insulation rating was calculated following EN ISO 717-1:2021 "Rating of sound insulation in buildings and of buildings elements - Part 1 Airborne sound insulation".

The comparison is made with boards screwed with "normal screw" such Vis PRÉGY TF212x25 Ultra having a total length of 25 mm, a diameter of 3.5 mm for the threaded portion and a diameter of 7 mm for the head of the screw.

### Example 1

| Plasterboard 10,9 kg/m² (1+1) Siniat 12,5 mm- T20 | Plasterboard 10,9 kg/m² (1+1) Siniat 12,5 mm- T40 | Plasterboard 12,6 kg/m² (1+1) Siniat 12,5 mm |
|---|---|---|
| 32 mm screws @ 300 mm center | 32 mm screws @ 300 mm center | 32 mm screws @ 300 mm center |
| Studs CS70/RX @ 600 mm center | Studs CS70/RX @ 600 mm center | Studs CS70/RX @ 600 mm center |
| Glass wool 45 mm | Glass wool 45 mm | Glass wool 45 mm |
| R_{w} = 46dB | R_{w} = 49dB | R_{w} = 48 dB |

The partition using boards screwed with the screws of the invention presents a Rw of 49 db instead of 46 db for a partition using the same boards screwed with Pregy screws and instead of 48 for a partition using boards with higher density and using Pregy screws.

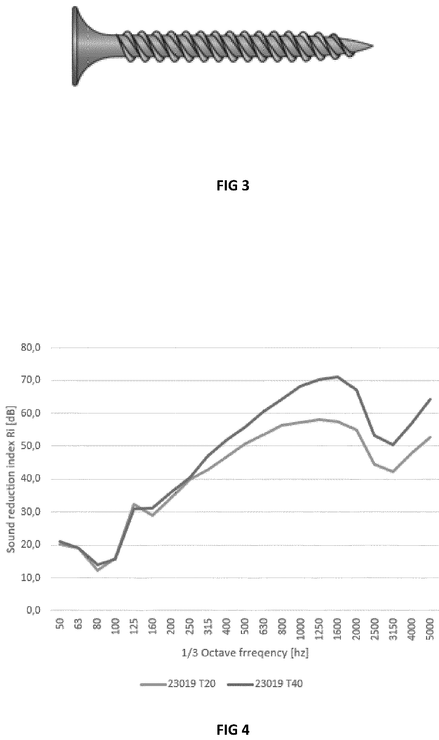

Figure 4 shows the sound reduction index for the two partitions using the same boards and studs but different screws.

### Example 2: lightweight boards

| Plasterboard 7.6 kg/m² (1+1) Siniat 12,5 mm | Plasterboard 7.5 kg/m² (1+1) Siniat 12,5 mm | Plasterboard 8.4 kg/m2 (1+1) Siniat 12.5 mm |
|---|---|---|
| 250 mm center | 250 mm center | 250 mm center |
| Studs CW75 @ 600 mm center | Studs CW75 @ 600 mm center | Studs CW75 @ 600 mm center |
| Glass wool 60 mm | Glass wool 60 mm | Glass wool 60 mm |
| R_{w} (C;Cₜᵣ) = 42dB | R_{w} (C;Cₜᵣ) = 45dB | R_{w} (C;Cₜᵣ) = 44 dB |

The partition made with light boards screwed with the screws of the invention presents a Rw of 45 db instead of 45 db for a partition made with the same boards screwed with Pregy screws and instead of 44 for a partition using boards with higher density and using Pregy screws.

### Example 3: high density boards

| Plasterboard 15,2 kg/m² (1+1) Siniat 12,5 mm | Plasterboard 15,2 kg/m² (1+1) Siniat 12,5 mm | Plasterboard silent board 17,4 kg/m2 Knauf 12;5mm |
|---|---|---|
| 250 mm center | 250 mm center | 250 mm center |
| Studs CW7100 @ 600 mm center | Studs CW7100 @ 600 mm center | Studs CW7100 @ 600 mm center |
| Glass wool 60 mm | Glass wool 60 mm | Glass wool 80 mm |
| R_{w} (C;Cₜᵣ) = 53 dB | R_{w} (C;Cₜᵣ) = 61 dB | R_{w} (C;Cₜᵣ) = 60 dB |

The partition made with high density boards screwed with the screws of the invention presents a Rw of 61 db instead of 53 db for a partition made with the same boards screwed with Pregy screws and instead of 60 for a partition made with boards with higher density and using Pregy screws.

### References

1: acoustic screw
2: head of the screw
3: tip portion
5: thread portion having a diameter D3
6: widening element
7: thickness of the plasterboard
8: stud
12: tapered surface of the screw
13: rib
t: length defined by the furthest end of the widening element from the head
T: thickness of the board
D0: diameter of the shank
D1: diameter of the head (2)
D3: diameter of the threaded portion (5)
D4: diameter determined by a radial extent of the widening element 6 with respect to the longitudinal axis 6.

## Claims

1. Drywall acoustic screw (1) for fastening a plasterboard (7) having a thickness T to a support (8), comprising
- a countersunk head (2), an elongated shank (4) and a tip portion (3) wherein the shank defines an axis A in its longitudinal direction and extends along the axis from the head (2) to the tip portion (3) (L1) and has a threaded portion (5) of a diameter D3
wherein the countersunk head (2) having a diameter D1, said countersunk head (2) includes a tapered underneath surface 12, on which are protruding at least two ribs (13), said ribs run diagonally to the axis of the shank,
wherein the tip portion (3) adjoins the threaded portion (5) and is suitable for producing a first borehole in the plasterboard and a second borehole in the support when the drywall screw is driven through the plasterboard in the direction of the axis,
wherein a widening element (6) is arranged between the head and the threaded portion (7)and presents a maximum diameter D4>D3,
**characterized in that** a diameter D2 defined by points of the ribs that protrude the most is ≥ than D4 and > D1.

2. Drywall acoustic screw according to any one of the previous claims wherein the widening element (6) comprises 2 diametrically opposite projections.

3. Drywall acoustic screw according to any one of the previous claims, wherein the projection(s) is or are wing-shaped.

4. Drywall acoustic screw according to any one of the previous claims, wherein the diameter D2 is at most 120% of D1, preferably at most 110% of D1.

5. Drywall acoustic screw according to any one of the previous claims, wherein the rib has a main direction, said direction forms an angle between 40 to 60 ° with the axis of the shank.

6. Drywall acoustic screw according to any one of the previous claims, wherein the widening element is resilient.

7. Drywall acoustic screw according to any one of the previous claims wherein the widening element having a furthest end from the tip of at least 10 mm.

8. Drywall acoustic screw according to any one of the previous claims wherein the tip portion is threaded.

9. Drywall acoustic screw according to any one of the previous claims wherein the head present a flat surface with slots for engagement by a driving tool of any suitable nature.

10. Drywall comprising at least one plasterboard (7) having a thickness T and acoustic screws according to any one of previous claims wherein a borehole having a diameter at least equal to D4 is present in the plasterboard on more than 80% of the thickness of the board and wherein the widening element (6) has a furthest end from the head of at most a length t ≤ the thickness of the board T.

11. Double skin drywall comprising a least two stacked plasterboards having a total thickness Tt and acoustic screws according to any one of previous claims wherein a borehole having a diameter at least equal to D4 is present in the plasterboard on more than 80% of the total thickness of the boards and wherein the widening element has a furthest end from the head of at most a length t ≤ the thickness of the sum of the thicknesses of the two boards .

12. Drywall according to claim 10 wherein the plasterboards have a thickness of 12.5mm and fastened with acoustic screws according to any one of the claims 1 to 9 and tested according to the norm EN ISO 10140-2:2021 and ISO 717-1 2020 wherein the drywall has a RW of at least one db and preferably at least 2 db higher than the same drywall with the same plasterboard using screw with a total length of 25 mm, a diameter of 3.5 mm for the threaded portion and a diameter of 7mm.

13. Drywall according to claim 10 or 11 wherein the plasterboards have a density below 8.5 kg/m² or 680 kg/m³.

14. Drywall according to claim 10 or 11 wherein the plasterboards have a density higher than 11 kg/m² or 880 kg/m³.

15. Use of a screw according to anyone of the claim 1 to 9 to improve the acoustic of a drywall made of a single skin or double skin.
